# EUROPEAN PATENT SPECIFICATION

(11) **EP 2 845 377 B1**
(45) Date of publication and mention of the grant of the patent: **10.10.2018**
(21) Application number: 13709126.0
(22) Date of filing: 14.03.2013
(51) Int. Cl.: H04M 1/02, H04M 1/725, G08B 25/01, G08B 25/12, H04M 11/02, H04M 11/04, H04N 7/18

(54) **INTERCOM SET**
TÜRSPRECHANLAGE
POSTE D'INTERCOMMUNICATION

(30) Priority: 16.03.2012 IT BO20120140
(43) Date of publication of application: 11.03.2015
(73) Proprietor: Righini, Veronica, 40026 Imola (IT)
(72) Inventor: Righini, Veronica, 40026 Imola (IT)
(74) Representative: Fuochi, Riccardo
(86) International application number: PCT/EP2013/055222
(87) International publication number: WO 2013/135804

(56) References cited:
- EP-A2- 0 117 251
- WO-A1-2008/105536
- GB-A- 2 337 658
- US-A- 3 482 037
- US-A1- 2004 080 413
- US-A1- 2008 111 684
- US-A1- 2008 309 509

## Description

The present invention relates to an intercom set.

The most widespread intercom set is the type installed in buildings which comprises a plurality of entryphones: this enables communication between a station arranged in proximity to the entrance to the building and the private dwellings, also in order to be able to remotely open the main door and the gates of the building.

Operation of each entryphone is comparable to that of a telephone.

In the external unit, which is installed outside the gate and/or the main door of the building, a microphone is provided which converts the sound of the voice of the individual who rang the bell into a corresponding electrical signal (in many cases a television camera is also provided for the acquisition of the image of the face of the person who rang the bell, so as to enable the person who is to allow entry to see the individual). The electrical signal causes, in the entryphone of the apartment corresponding to the bell selected by the individual outside, an acoustic signal. An identical circuit enables communication in the opposite direction. Thanks to such electrical signals, intercommunication is possible between outside and any entryphone arranged inside the several apartments and building units present in the building.

An entryphone is generally constituted by several components: at least one keypad that comprises the buttons that make it possible to call a particular internal extension (adapted connections, usually wired, connect each individual button to a signaling device, usually acoustic, which is present in the entryphone inside the corresponding apartment); at least one external unit provided with microphone and loudspeaker, which is installed in proximity to the entrance to the building; an internal unit, usually located in each apartment and provided, usually, with a handset with microphone and loudspeaker, a ringer, and a button to command the opening of the gate/main door; an electric power supply that provides the electric power necessary for correct operation; at least one door opener, i.e. a command system (usually a relay) which, upon the pressing of a button arranged on the internal unit, commands the opening of the electric lock installed on the gate and/or on the main door.

For buildings comprising many internal building units, digital entryphone systems are conveniently used: in such case, a selection keypad and a display make it possible to select the desired internal extension and send it a call signal (this also minimizes the electrical wiring in that this type of apparatus can be conveniently managed by means of a simple node-based network wiring typology, without necessitating direct point to point connections).

Some particular entryphone systems, in particular those used in buildings for professional and commercial use, can allow a private conversation between two different internal extensions. Moreover it is possible to associate the entryphone with a telephone dialer which is associated with a wired or cellular (mobile) telephone network in order to enable telephone calls to be made from the internal unit.

Unfortunately, it is increasingly common for ill-minded individuals to intrude into dwellings for the purposes of theft or other crimes.

The entry of an ill-minded individual can be ensured, erroneously, by a resident of the building, in that the ill-minded individual can pose as a courier, a postman or the like.

Once the ill-minded individual arrives in front of the door of a single residential unit, his/her entrance thereto is no longer subordinate to checks through the entryphone (or video entryphone) and thus the risk of violent intrusion (for example by pushing the door when it is cracked open to see who rang the bell) is very high.

This situation subject persons who live alone, particularly women and the elderly, to very great risk, resulting in a condition of high insecurity.

US 2004/080413 A1 discloses an house intercom security system comprising a main unit connected to an indoor intercom and to an outdoor intercom.

The indoor intercom comprises an alarm button to drive the main unit to dial the telephone number of a security office or the like, and at the same time to turn on an alarm connected to the main unit.

EP 0 117 251 A2 discloses an intercom set comprising at least an external unit (door body) and at least an internal unit (handset), connected by an inner body. The external units may be a plurality (in houses with several apartments). The inner body comprises an alarm signal generator which can be operated by a release switch; the latter is distributed in several places in the apartment as tensile or pressure switch, especially near the sleeping quarters, so that the emergency call of a single person even in highly restricted mobility can be triggered with reasonable assurance.

GB 2 337 658 A discloses a door answering machine which is able, as an operator activates a switch, to respond to a caller outside the door by producing a synthesized message audible to both caller and operator. The door answering machine comprises and external unit and, optionally, a remote control unit. The remote control unit comprises an alarm button to drive away undesirable callers.

US 2008/111684 A1 discloses a security system for the surveillance of a doorway or other point of entry. The security system comprises an external unit, located by the doorway, comprising a video camera, a microphone, a proximity detector and a speaker.

The external unit is remotely controlled by a cellular telephone. The security system further comprises and alarm system interface which allows the homeowner to utilize the cellular phone to notify a home security company or the police department in the instance of a break-in or other crime.

US 2008/309509 A1 discloses a personal protection system for a door bell adapted to retrieve dog barking sounds. The system comprise a remote control (internal unit, "key fob") for activating the dog barking, produced by a speaker.

US 3 482 037 A discloses a home security system utilizing home surveillance. The system includes a video scanning device at the entrance door of the house, and audio communication equipment inside and outside the door (internal and external unit) for conversing with the visitor outside the door.

An internal control unit of the security system is located inside the house. The control unit includes an alarm control, for activating an alarm signal in the guard station.

WO 2008/105536 A1 discloses an interphone system comprising a main phone installed inside the building, and an intercom slave installed outside the building, for audio communication with the main phone. The main phone is also connected with two or more fire alarms. When a fire is detected in the building, a warning sound is generated by the fire alarms and by the main phone, and a warning video is generated in the display of the main phone.

The aim of the present invention is to solve the above mentioned drawbacks, by providing an intercom set that makes it possible to minimize the risk of intrusion of ill-minded individuals into residences.

Within this aim, an object of the invention is to provide an intercom set that heightens the sense of security of the persons who live in the building in which it is installed.

Another object of the invention is to provide an intercom set that provides information that is useful to investigating officers about the persons who committed the intrusion attempt.

Another object of the present invention is to provide an intercom set that is low cost, easily and practically implemented, and safe in use.

This aim and these objects are achieved by an intercom set according to claim 1. Advantageous embodiments are set out in the dependent claims.

The embodiments and/or clauses and/or examples of the following description which are not covered by the appended claims are considered as not being part of the present invention.

Further characteristics and advantages of the invention will become better apparent from the description of a preferred, but not exclusive, embodiment of the intercom set according to the invention, which is illustrated by way of non-limiting example in the accompanying drawings wherein:

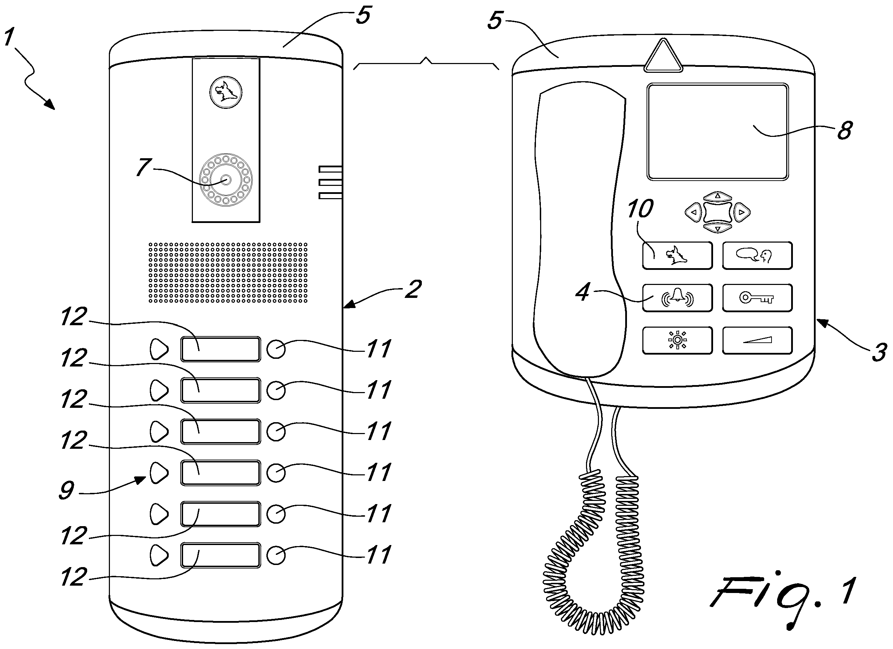

Figure 1 is a schematic front elevation view of an intercom set according to the invention;

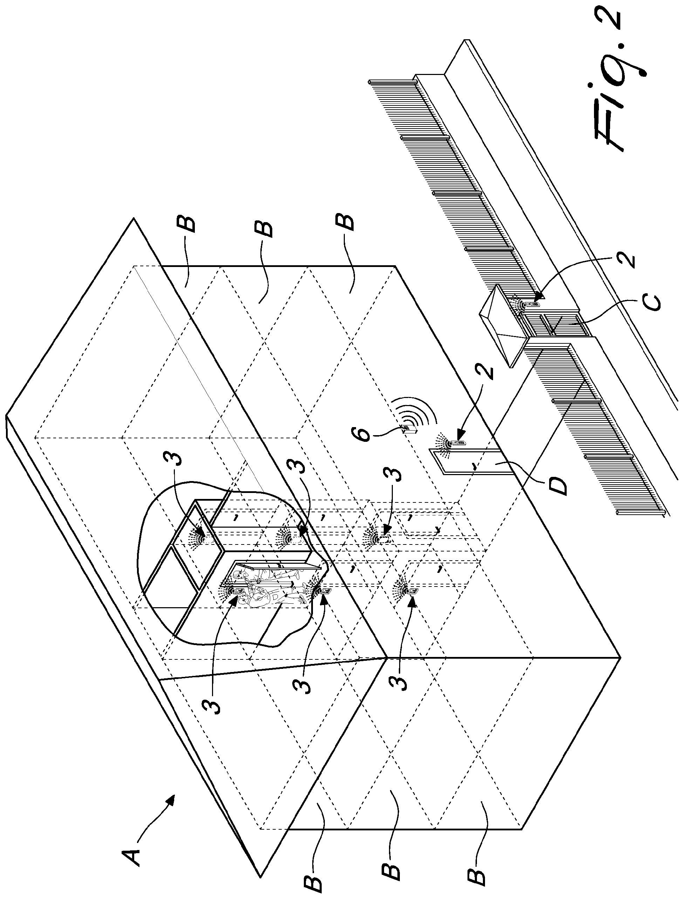

Figure 2 is a schematic perspective view of an intercom set according to the invention;

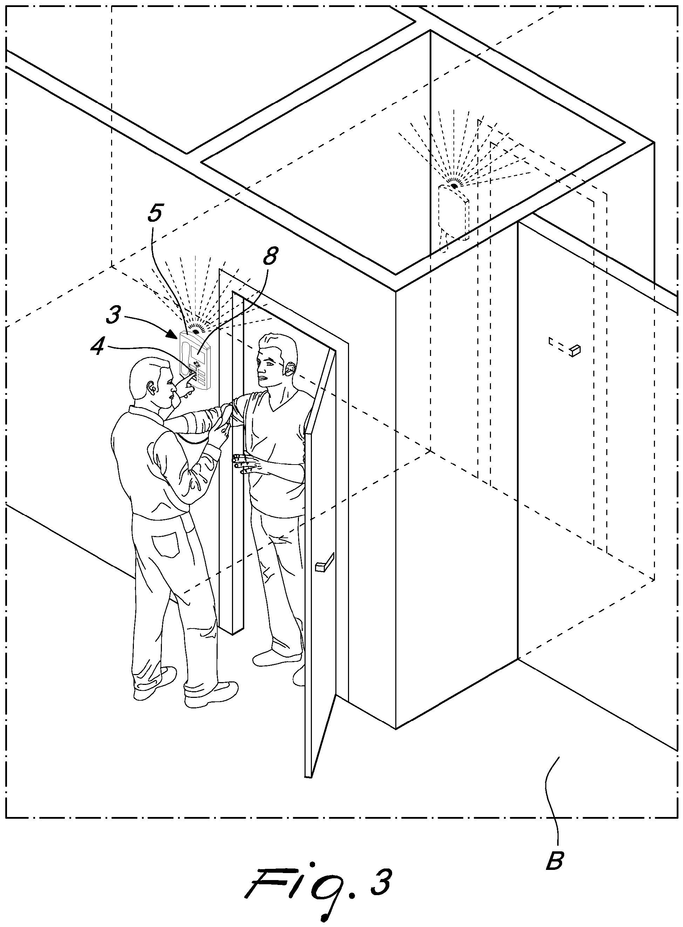

Figure 3 is an enlarged view of a detail of Figure 2.

With reference to the figures, the reference numeral 1 generally designates an intercom set.

The intercom set 1 is made up in a substantially similar manner to a traditional entryphone.

The set 1 in fact comprises at least one external signal transceiver unit 2, of the type preferably selected among wired units and remotely operated units (WLAN, radiofrequency, wired network, infrared or other connections), which is arranged outside a building A.

The set 1 further comprises at least one internal signal transceiver unit 3, of the type preferably selected among wired units and remotely operated units, which is arranged within a respective building unit B that is present in the building A.

It should be noted that, depending on the type of system selected, it will in any case be possible to provide the set 1 according to the invention by adopting an architecture of the wired type (for example of the analog type, in which each internal unit is connected to the at least one external unit by a respective multipolar cable, and/or of the digital type, in which the units are mutually interconnected with network cables) or an architecture with remote communication (comparable in fact to that of a WLAN network or a radiofrequency network).

With particular reference to the set 1 according to the invention, the at least one internal unit 3 comprises at least one respective control element 4 for sending an alarm signal.

In such case the at least one external unit 2 and the at least one internal unit 3 will comprise at least one deterrent device 5, which is selected preferably among a loudspeaker and a visual indicator, designed to emit an alarm signal.

The visual indicator can be constituted by a portion of the units 2 and 3 which is provided with a light source (for example flashing) or by an actual flashing emergency beacon arranged proximate to each unit 2 and 3.

Practically, according to an embodiment that is particularly simple and efficient, the activation by a user who is employing an internal unit 3 of the control element 4, will cause the triggering of the deterrent device present in his/her unit 3 and in the external units 2 that are connected thereto.

This means that, if an ill-minded individual succeeds in entering the apartment B in which an internal unit 3 is installed, the user will be able to send an alarm signal in an extremely simple manner by way of the deterrent devices 5 which are controlled by his/her unit 3.

In particular, the presence of deterrent devices 5 outside the building A as well will make it possible to render the crime in progress evident to bystanders as well, thus favoring the intervention of people to come to the assistance of the user who sent the signal (the bystanders could further call law enforcement in order to ensure the arrest of the ill-minded individual).

According to a particular embodiment of undoubted practical and applicative interest, the external units 2 are a plurality, arranged at the doors (D) and gates (C) for access to the building A: in such case each external unit 2 will comprise at least one respective deterrent device 5.

The installation is not ruled out, outside the building A, of supplementary sirens 6 specifically intended to broadcast the alarm to a great distance: this will certainly ensure a higher probability of mobilization by bystanders or will attract the attention of law enforcement in transit in that area.

With specific reference to an applicative solution that is particularly efficient and adapted to perceptibly raise the security of the apartments B present in a building A in which it is installed, the internal units 3 can be a plurality, arranged at the doors (D) for access to each individual building unit (apartment B, office, shop or the like present in the building A).

According to such implementation configuration each internal unit 3 will comprise at least one respective deterrent device 5 and at least one respective control element 4 for sending an alarm signal.

Thus a condition arises whereby the actuation of the control element 4 in a particular apartment B (or office or shop etc.) will cause the triggering of the alarm signal in all units (in all the internal units 3 and in all the external units 2) that are connected to the one in which the actuation of the control element 4 occurred.

For the ill-minded individual, this alarm condition broadcast throughout the building A and outside it implies a high probability of being repulsed or captured: in fact the persons present in the several apartments B (or offices or shops etc.) will go out in order to see what is happening and, possibly, may call law enforcement for rapid intervention.

The presence of the set 1 thus also constitutes a strong deterrent for ill-minded individuals who, aware that it is installed in a building A, will tend to avoid it owing to the high risk of being stopped and possibly arrested.

The set 1 further constitutes an important aid to investigation for law enforcement in that it can comprise at least one memory component, connected to the external unit 2, for the temporary recording of the signal emitted by the individual who operated a keypad of the external unit 2 in order to communicate with a specific internal unit 3.

In particular it will thus be possible to record the voices of all the persons who have spoken into the external unit 2: such recordings, kept on a specific memory component, can be retained for a preset time.

If an ill-minded individual gains entry and a user activates the deterrent device 5 by way of the control element 4 present in his/her internal unit 3, then even if the ill-minded individual succeeds in escaping, law enforcement will be able to use the recording of his/her voice as a clue in order to guide investigations.

More specifically the at least one external unit 2 for transceiving signals can preferably comprise a television camera 7 and the at least one internal unit 3 can comprise at least one screen 8 for displaying the signal originating from the television camera 7.

According to such variation of application, the at least one memory component will be connected to the external unit 2 for the temporary recording of the image, acquired by the television camera 7, and of the voice, detected by the microphone present in the unit 2, of the individual who acted on a keypad 9 of the external unit 2 in order to communicate with a specific internal unit 3.

In this case, if the control element 4 is activated and thus the deterrent devices 5 (and optionally also the auxiliary siren 6) are put into operation, the images and the voice recordings made prior to such occurrence will be saved in the preset memory component.

The images and the recordings of the voice of the ill-minded individual could be used by law enforcement as clues for investigation and/or as evidence of his/her guilt.

It is important to underline that, after a preset time, the stored images and voice recordings will be deleted automatically from the memory component thus avoiding any problems associated with the protection of privacy.

The internal unit 3, in a particular variation of application of the invention, can comprise an auxiliary deterrent device which is arranged on the outer side of the wall where the door for access to the respective building unit (apartment B, office, shop etc.) is installed, for the emission of a specific alarm signal.

The auxiliary deterrent device could be for example a loudspeaker with which the user can send signals of different kinds.

For example it could broadcast the voice of the user so as to enable him/her to call directly for help (if the criminal flees and the user cannot physically follow in pursuit, the user can communicate what is happening to the outside world).

Moreover the auxiliary deterrent device could broadcast sounds of a different nature: for example it could broadcast the recording of the barking of a dog (the deterrent power of which against an ill-minded individual is certainly evident) or the recording of the siren of a law enforcement vehicle (in order to induce the criminal to flee in the fear that they have already arrived to catch him/her).

Such alarm signals can further also be broadcast by the deterrent devices 5 that are present in the units 2 and 3.

In fact, when the user realizes (by observing the screen 8 or hearing an unknown and suspicious voice or other sources of noise of the type of a burglary/breaking of doors and windows) that an ill-minded individual may be present at the gate C or at the main door D of the building A or in proximity to the apartment, the emission of such alarm signals (such as for example the recording of a dog barking or the siren of a law enforcement vehicle) could easily induce the ill-minded individual to flee (or in any case make him/her desist owing to the fear, for example, of having to confront a dog after gaining entry to the apartment B).

It should be noted that the control elements for sending an alarm signal are at least two in number, a first element 4 for switching on the deterrent device 5 in all the units, internal 3 and external 2, which are controlled by the signal sending unit 2, and a second element 10 for the emission of a preset signal (a dog barking, a siren of a law enforcement vehicle and the like) by way of the auxiliary deterrent device and/or the deterrent devices 5.

In order to activate the alarm signals, the elements 4 and 10 are preferably constituted by buttons.

Also, if the element/button 10 is actuated, the memory component will retain a record of the recordings made prior to such actuation: again, this is in order to provide law enforcement with informative material about the ill-minded individual.

It should be noted that the set 1 can preferably comprise a control and management apparatus which is connected to all the internal units 3 and external units 2.

Such apparatus will be provided with a device, of the type preferably selected among a telephone dialer, a cellular telephone, a modem, a WLAN repeater and the like, for the automatic sending of alarm data strings following the actuation of a control element 4, 10 of an internal unit 3 to suitable contacts.

The most probable contacts would include law enforcement; the possibility is not ruled out, however, of the signal being sent to preset telephone numbers, preset email addresses and the like.

It is convenient to note that, in such case, the alarm strings will contain information selected among:
- the location of origin of the alarm;
- the actuation time of the control element 4, 10;
- the recording of the voice of the individuals who have spoken into the at least one external unit 2 prior to (or during, or after) the actuation of the control element 4, 10;
- the recording of the picture of the individuals who stood in front of the at least one external unit 2 prior to the actuation of the control element 4, 10.

It should be noted moreover that each unit, inner 3 and outer 2, can comprise a display for the immediate identification of the internal unit 3 in which the control element 4, 10 has been actuated.

More specifically, on the external units it will be possible to have an illuminated signaling device 11 (of the type of a small bulb, an LED, a screen and the like) placed beside the plaque 12 with the name corresponding to the several apartments B and thus to the several internal units 3.

The actuation of the control element 4, 10 will thus cause the switching-on of such signaling device 11, making identification of the place from where the alarm signal was sent simpler.

A similar outcome can easily be achieved in the internal units 3 of a set that comprises a television camera 7 and display screen 8: in fact, the display screen 8 of all the other internal units 3 could show (during the alarm) the indication of the apartment B (office, shop and the like) from which the alarm signal originated.

If in the building A there are concierge stations and the like, then all the information relating to the set 1 can be checked and verified by way of an adapted control device (of the type of a PC, a handheld device, a tablet computer, a smartphone and the like) thus enabling the concierge to take prompt action in the event of an alarm.

The set 1 according to the invention further lends itself to numerous implementations, in that it is possible to have a button in each unit 2 which is designed to send a fire alarm signal: in this manner, if a user discovers the fire he/she can give immediate notice of it to all other persons who are present in the building A or are in the immediate vicinity of it.

In such case the storage of information (images and voice) of the last people who entered the building could be useful if it transpires that the fire was criminally motivated.

Advantageously the present invention solves the above mentioned problems, by providing an intercom set 1 of type which makes it possible to minimize the risk of intrusion of ill-minded individuals into residences (apartments A, offices, shops and the like).

The simplicity and immediacy with which the alarm signal can be emitted by each user is in fact such as to discourage attempts at theft, fraud and/or aggression in buildings A in which the set 1 is installed.

Effectively the intercom set 1 heightens the sense of security of the persons who live in the building A in which it is installed.

This is due to the fact that each person knows they can broadcast their alarm to their neighbors who, given the minimal distances involved, can promptly intervene in the event of attempts at theft, fraud and/or aggression.

Positively the intercom set 1 provides information that is useful to investigating officers about the persons who committed the attempt at intrusion.

This characteristic, which is obtainable thanks to the above mentioned memory component, is particularly useful to investigating officers and constitutes an additional deterrent for ill-minded individuals who know they are running a high risk of being recognized and, thus, easily traced.

Conveniently the intercom set 1 is low cost, easily and practically implemented, and safe in use.

The invention thus conceived is susceptible of numerous modifications and variations, all of which are within the scope of the appended claims.

In the embodiments illustrated, individual characteristics shown in relation to specific examples may in reality be interchanged with other, different characteristics, existing in other embodiments.

For example the possibility is not ruled out of arranging external units 2 outside the door for access to the apartment B as well.

Moreover it is possible to arrange the deterrent devices 5, while still being controlled by the respective units 2 and 3, at a distance from them, as a function of the particular implementation requirements.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An intercom set, of the type comprising at least one external signal transceiver unit (2), of the type selected among wired units and remotely operated units, which is arranged outside a building (A), said external unit (2) including a microphone and a television camera (7), and at least one internal signal transceiver unit (3), of the type selected among wired units and remotely operated units, which is arranged inside a respective apartment (B), office or shop present in said building (A) said at least one internal unit (3) comprising at least one screen (8) for displaying the signal originating from said television camera (7), and at least one respective control element (4) for sending an alarm signal, said at least one external unit (2) and said at least one internal unit (3) comprising at least one deterrent device (5) which is selected among a loudspeaker and a visual indicator, designed to emit an alarm signal, the activation by a user, who is employing said internal unit (3), of said control element (4) is configured to cause the triggering of said deterrent device (5) present in said internal unit (3) and said external unit (2) which is connected thereto, at least one memory component being connected to said external unit (2) for the temporary recording of the image, acquired by said television camera (7), and of the voice, detected by said microphone, of the individual who has operated a keypad (9) of said external unit (2) in order to communicate with said internal unit (3), wherein if said control element (4) is activated and thus said deterrent devices (5) are put into operation, the images and the voices recordings made prior to such occurrence are configured to be saved in said memory component.

2. The intercom set according to claim 1, **characterized in that** said external units (2) are a plurality, arranged at the doors (D) and gates (C) for access to the building (A) and/or to the apartment (B), each external unit (2) comprising at least one respective deterrent device (5).

3. The intercom set according to claim 2, **characterized in that** said internal units (3) are a plurality, arranged at the doors (D) for access to each individual building unit, each internal unit (3) comprising at least one respective deterrent device (5) and at least one respective control element (4) for sending an alarm signal, the actuation of said control element (4) causing the triggering of said alarm signal on the respective deterrent device (5) in all the units (2,3) that are connected to the one in which said actuation of said control element (4) has occurred.

4. The intercom set according to claim 1, **characterized in that** said internal unit (3) comprises an auxiliary deterrent device which is arranged on the outer side of the wall where the door (D) for access to the respective building unit, apartment (B), is installed, for the emission of an auxiliary alarm signal.

5. The intercom set according to claim 4, **characterized in that** said control elements for sending an alarm signal are at least two in number, a first element (4) for switching on said deterrent device (5) in all units, internal (3) and external (2), which are controlled by the signal sending unit (3), and a second element (10) for starting the emission of a predefined signal through said auxiliary deterrent device.

6. The intercom set according to one or more of the preceding claims, **characterized in that** it comprises a control and management apparatus which is connected to all of said internal units (3) and external units (2), said apparatus being provided with a device, of the type selected among a telephone dialer, a cellular phone, a modem, a WLAN repeater and the like, for the automatic sending of alarm strings following the actuation of a control element (4,10) of an internal unit (3) to suitable contacts, such as law enforcement, preset telephone numbers, predefined e-mail addresses and the like.

7. The intercom set according to claim 6 **characterized in that** said alarm strings comprise information selected among le location of origin thereof, the actuation time of the control element (4,10), the recording of the voice of the individuals who have spoken into the at least one external unit (2) in a predefined time interval with respect to the instant of actuation of said control element (4,10), the recording of the picture of the individuals who stood in front of the at least one external unit (2) prior to the actuation of said control element (4,10).

8. The intercom set according to one or more of the preceding claims, **characterized in that** each unit, internal (3) and external (2), comprises a display for immediate identification of the internal unit (3) in which the control element (4,10) has been actuated.

## Patentansprüche

1. Sprechanlagen-Satz des Typs mit mindestens einer externen Signal-Sende-Empfangseinheit (2) des aus verdrahteten Einheiten und ferngesteuerten Einheiten ausgewählten Typs, die außerhalb eines Gebäudes (A) angeordnet ist, wobei die besagte externe Einheit (2) ein Mikrofon und eine Fernsehkamera (7) einschließt, und mindestens einer internen Signal-Sende-Empfangseinheit (3) des aus verdrahteten Einheiten und ferngesteuerten Einheiten ausgewählten Typs, die innerhalb einer entsprechenden Wohnung (B), eines entsprechenden Büros oder eines entsprechenden Geschäfts in dem besagten Gebäude (A) angeordnet ist, wobei die besagte mindestens eine interne Einheit (3) mindestens einen Bildschirm (8) zum Anzeigen des von der besagten Fernsehkamera (7) stammenden Signals und mindestens ein entsprechendes Steuerelement (4) zum Senden eines Alarmsignals umfasst, die besagte mindestens eine externe Einheit (2) und die besagte mindestens eine interne Einheit (3) umfassend mindestens eine Abschreckungsvorrichtung (5), die aus einem Lautsprecher und einer optischen Anzeige ausgewählt ist, die dazu bestimmt ist, ein Alarmsignal auszusenden, wobei die Aktivierung des besagten Steuerelements (4) durch einen Benutzer, der die besagte interne Einheit (3) verwendet, so konfiguriert ist, dass sie die Auslösung der in der besagten internen Einheit (3) vorhandenen besagten Abschreckungsvorrichtung (5) und der besagten damit verbundenen externen Einheit (2) bewirkt, wobei mindestens eine Speicherkomponente mit der besagten externen Einheit (2) für die vorübergehende Aufzeichnung des von der besagten Fernsehkamera (7) aufgenommenen Bildes und der durch das besagte Mikrofon erfassten Stimme der Person, die eine Tastatur (9) der besagten externen Einheit (2) betätigt hat, verbunden ist, um mit der besagten internen Einheit (3) zu kommunizieren, worin, wenn das besagte Steuerelement (4) aktiviert wird und somit die besagten Abschreckvorrichtungen (5) in Betrieb genommen sind, die Bild- und die Sprachaufzeichnungen, die vor einem solchen Ereignis erstellt wurden, so konfiguriert sind, dass sie in der besagten Speicherkomponente gespeichert werden.

2. Sprechanlagen-Satz nach Anspruch 1, **dadurch gekennzeichnet, dass** die besagten externen Einheiten (2) eine Vielzahl sind, die an den Türen (D) und Toren (C) für den Zugang zum Gebäude (A) und/oder zur Wohnung (B) angeordnet sind, wobei jede externe Einheit (2) mindestens eine entsprechende Abschreckungsvorrichtung (5) umfasst.

3. Sprechanlagen-Satz nach Anspruch 2, **dadurch gekennzeichnet, dass** die besagten internen Einheiten (3) eine Vielzahl sind, die an den Türen (D) für den Zugang zu jeder einzelnen Gebäudeeinheit angeordnet sind, wobei jede interne Einheit (3) mindestens eine entsprechende Abschreckungsvorrichtung (5) und mindestens ein entsprechendes Steuerelement (4) zum Senden eines Alarmsignals umfasst, wobei die Betätigung des besagten Steuerelements (4) die Auslösung des Alarmsignals an der entsprechenden Abschreckungsvorrichtung (5) in allen Einheiten (2, 3) bewirkt, die mit derjenigen verbunden sind, in der die Betätigung des besagten Steuerelements (4) erfolgt ist.

4. Sprechanlagen-Satz nach Anspruch 1, **dadurch gekennzeichnet, dass** die besagte interne Einheit (3) eine zusätzliche Abschreckvorrichtung umfasst, die an der Außenseite der Wand angeordnet ist, an der die Tür (D) für den Zugang zur entsprechenden Gebäudeeinheit, Wohnung (B) installiert ist, um ein zusätzliches Alarmsignal auszugeben.

5. Sprechanlagen-Satz nach Anspruch 4, **dadurch gekennzeichnet, dass** die besagten Steuerelemente zum Senden eines Alarmsignals mindestens zwei in der Anzahl sind, ein erstes Element (4) zum Einschalten der besagten Abschreckvorrichtung (5) in allen Einheiten, intern (3) und extern (2), die von der Signalsendeeinheit (3) gesteuert werden, und ein zweites Element (10) zum Starten der Ausgabe eines vordefinierten Signals durch die besagte zusätzliche Abschreckvorrichtung.

6. Sprechanlagen-Satz nach einem oder mehreren der vorangehenden Ansprüche, **dadurch gekennzeichnet, dass** er ein Steuer- und Verwaltungsgerät umfasst, das mit allen besagten internen Einheiten (3) und externen Einheiten (2) verbunden ist, wobei das besagte Gerät mit einer Vorrichtung des Typs versehen ist, der aus einem Telefonwähler, einem Mobiltelefon, einem Modem, einem WLAN-Repeater und dergleichen ausgewählt ist, um nach der Betätigung eines Steuerelements (4, 10) einer internen Einheit (3) automatisch Alarmzeichenfolgen an geeignete Kontakte, wie Strafverfolgungsbehörden, voreingestellte Telefonnummern, vordefinierte E-Mail-Adressen und dergleichen zu senden.

7. Sprechanlagen-Satz nach Anspruch 6, **dadurch gekennzeichnet, dass** die besagten Alarmzeichenfolgen Informationen umfassen, die aus dem Ursprungsort davon, der Betätigungszeit des Steuerelements (4, 10), der Aufzeichnung der Stimme der Personen, die in die mindestens eine externe Einheit (2) in einem vorbestimmten Zeitintervall in Bezug auf den Zeitpunkt der Betätigung des besagten Steuerelements (4, 10) gesprochen haben, der Aufzeichnung des Bildes der Personen, die vor der Betätigung des besagten Steuerelements (4, 10) vor der mindestens einen externen Einheit (2) standen, ausgewählt sind.

8. Sprechanlagen-Satz nach einem oder mehreren der vorangehenden Ansprüche, **dadurch gekennzeichnet, dass** jede Einheit, intern (3) und extern (2), eine Anzeige zur sofortigen Identifizierung der internen Einheit (3) umfasst, in der das Steuerelements (4, 10) betätigt worden ist.

## Revendications

1. Un poste d'intercommunication, du type comprenant au moins un émetteur-récepteur de signal externe (2), du type sélectionné parmi des unités filaires et des unités télécommandées, disposé à l'extérieur d'un bâtiment (A), ladite unité externe (2) comprenant un microphone et une caméra de télévision (7), et au moins un émetteur-récepteur de signal interne (3), du type sélectionné parmi des unités filaires et des unités télécommandées, agencé à l'intérieur d'un appartement (B), d'un bureau ou d'un magasin respectifs présents dans ledit bâtiment (A), ladite au moins une unité interne (3) comprenant au moins un écran (8) pour afficher le signal provenant de ladite caméra de télévision (7), et au moins un élément de commande (4) respectif pour envoyer un signal d'alarme, ladite au moins une unité externe (2) et ladite au moins une unité interne (3) comprenant au moins un dispositif de dissuasion (5) sélectionné parmi un haut-parleur et un indicateur visuel, conçu pour émettre un signal d'alarme, l'activation par un utilisateur, qui utilise ladite unité interne (3), dudit élément de commande (4) étant configurée pour entraîner le déclenchement dudit dispositif de dissuasion (5) présent dans ladite unité interne (3) et ladite unité externe (2) raccordée à celui-ci, au moins un composant de mémoire étant raccordé à ladite unité externe (2) pour l'enregistrement temporaire de l'image, acquise par ladite caméra de télévision (7), et de la voix, détectée par ledit microphone, de l'individu qui a utilisé un clavier (9) de ladite unité externe (2) afin de communiquer avec ladite unité interne (3), dans lequel si ledit élément de commande (4) est activé et donc lesdits dispositifs de dissuasion (5) sont mis en service, les enregistrements d'images et de voix réalisés avant ledit événement sont configurés pour être enregistrés dans ledit composant de mémoire.

2. Poste d'intercommunication selon la revendication 1, **caractérisé en ce que** lesdites unités externes (2) sont plusieurs, disposées sur les portes (D) et les barrières (C) pour accéder au bâtiment (A) et/ou à l'appartement (B), chaque unité externe (2) comprenant au moins un dispositif de dissuasion (5) respectif.

3. Poste d'intercommunication selon la revendication 2, **caractérisé en ce que** lesdites unités internes (3) sont plusieurs, disposées sur les portes (D) pour accéder à chaque bâtiment individuel, chaque unité interne (3) comprenant au moins un dispositif de dissuasion (5) respectif et au moins un élément de commande (4) respectif pour envoyer un signal d'alarme, l'actionnement dudit élément de commande (4) entraînant le déclenchement dudit signal d'alarme sur le dispositif de dissuasion (5) respectif dans toutes les unités (2, 3) raccordées à celui dans lequel ledit actionnement dudit élément de commande (4) est survenu.

4. Poste d'intercommunication selon la revendication 1, **caractérisé en ce que** ladite unité interne (3) comprend un dispositif de dissuasion auxiliaire disposé sur le côté extérieur du mur sur lequel la porte (D) d'accès au bâtiment, à l'appartement (B) respectifs, est installée, pour l'émission d'un signal d'alarme auxiliaire.

5. Poste d'intercommunication selon la revendication 4, **caractérisé en ce que** lesdits éléments de commande pour l'envoi d'un signal d'alarme sont au moins deux, un premier élément (4) pour mettre en marche ledit dispositif de dissuasion (5) dans toutes les unités, internes (3) et externes (2), commandées par l'unité d'envoi du signal (3), et un deuxième élément (10) pour démarrer l'émission d'un signal prédéfini par l'intermédiaire dudit dispositif de dissuasion auxiliaire.

6. Poste d'intercommunication selon une ou plusieurs des revendications précédentes, **caractérisé en ce qu'**il comprend un appareil de commande et de gestion raccordé à toutes lesdites unités internes (3) et toutes lesdites unités externes (2), ledit appareil étant doté d'un dispositif, du type sélectionné parmi un composeur, un téléphone cellulaire, un modem, un répéteur WLAN et analogues, pour l'envoi automatique de chaînes d'alarme après l'actionnement d'un élément de commande (4, 10) d'une unité interne (3) à des contacts appropriés, tels que la police, à des numéros de téléphone prédéfinis, des adresse e-mail prédéfinies et analogues.

7. Poste d'intercommunication selon la revendication 6, **caractérisé en ce que** lesdites chaînes d'alarme comprennent des informations sélectionnées parmi le lieu d'origine de celui-ci, l'heure d'actionnement de l'élément de commande (4, 10), l'enregistrement de la voix des individus qui ont parlé dans au moins une unité externe (2) dans un intervalle de temps prédéfini par rapport à l'instant d'actionnement dudit élément de commande (4, 10), l'enregistrement de l'image des individus qui se sont trouvés en face d'un moins une unitée externe (2) avant l'actionnement dudit élément de commande (4, 10).

8. Poste d'intercommunication selon une ou plusieurs des revendications précédentes, **caractérisé en ce que** chaque unité, interne (3) et externe (2), comprend un écran pour l'identification immédiate de l'unité interne (3) dans laquelle l'élément de commande (4, 10) a été actionné.
